# EUROPÄISCHE PATENTSCHRIFT

(11) **EP 2 473 725 B1**
(45) Veröffentlichungstag und Bekanntmachung des Hinweises auf die Patenterteilung: **12.08.2015**
(21) Anmeldenummer: 10750088.6
(22) Anmeldetag: 26.08.2010
(51) Int. Cl.: F02B 71/00, F16C 29/00, F16C 32/04

(54) **KOLBENMASCHINE MIT MAGNETISCHER LAGERUNG DES KOLBENS**
PISTON MACHINE WITH MAGNETIC BEARING FOR PISTON
MACHINE À PISTON AVEC PALIER MAGNETIQUE POUR PISTON

(30) Priorität: 03.09.2009 DE 102009040051
(43) Veröffentlichungstag der Anmeldung: 11.07.2012
(73) Patentinhaber: Siemens Aktiengesellschaft, 80333 München (DE)
(72) Erfinder: KLÖPZIG, Markus, 91320 Ebermannstadt (DE)
(86) Internationale Anmeldenummer: PCT/EP2010/062438
(87) Internationale Veröffentlichungsnummer: WO 2011/026774

(56) Entgegenhaltungen:
- EP-A1- 0 053 873
- EP-A1- 0 534 613
- WO-A1-02/40843
- US-A- 4 473 259
- US-A- 4 889 039

## Beschreibung

Die vorliegende Erfindung bezieht sich auf eine Kolbenmaschine mit wenigstens einem ersten Kolben und wenigstens einem ersten Gehäuse. Das wenigstens eine erste Gehäuse umschließt den wenigstens einen ersten Kolben vollständig oder zumindest teilweise. Der wenigstens eine erste Kolben ist beweglich in dem wenigstens einen ersten Gehäuse magnetisch gelagert, mit Hilfe von wenigstens einer Einrichtung zur magnetischen Lagerung des wenigstens einen ersten Kolbens.

Wärmekraftmaschinen werden zur Energieumwandlung von chemischer in mechanische Energie, von thermischer in mechanische Energie und von mechanischer in thermische Energie eingesetzt. Verbrennungskraftmaschinen als Wärmekraftmaschine wandeln chemische in mechanische Energie um, Stirlingmaschinen als Wärmekraftmaschine wandeln thermische in mechanische Energie um und wärmepumpen als Wärmekraftmaschine wandeln mechanische in thermische Energie um. Eine der am häufigsten eingesetzten Wärmekraftmaschinen ist die Kolbenmaschine, bei welcher mechanische Energie von einem Kolben auf eine Welle mit Hilfe von einem Pleuel übertragen wird.

Ein alternativer Aufbau ist durch die Freikolbenmaschine gegeben. Eine Freikolbenmaschine ist eine Kolbenmaschine ohne Pleuel. Freikolbenmaschinen werden z.B. als Pumpe für ein hydraulisches System oder im zusammenspiel mit einem Lineargenerator zur direkten Erzeugung von elektrischer Energie eingesetzt.

Unabhängig davon, ob eine Wärmekraftmaschine als klassische Kolbenmaschine oder als Freikolbenmaschine ausgebildet ist, tritt im Betrieb zwischen Kolben und Zylinder in der Regel Reibung auf, welcher zu Verschleiß führt. Der Verschleiß ergibt mit der Zeit eine eingeschränkte Funktion oder führt zu einer Zerstörung der Wärmekraftmaschine. Eine klassische Lösung des Problems der Reibung bzw. des Verschleißes erfolgt durch Schmierung der Maschine. Schmierung reduziert die mechanische Reibung zwischen Kolben und Zylinder, behebt das Problem des Verschleißes jedoch nicht vollständig. Insbesondere Querkräfte, welche auf den Kolben z.B. abhängig von der Position eines Pleuels wirken können, stellen eine mögliche Ursache für den Verschleiß des Kolben-Zylinder-Systems dar, welcher durch Schmierung nicht behoben wird. Eine Schmierung über eine Ölpumpe birgt weiterhin Probleme beim Anlassen der Maschine, wenn die Ölpumpe über die Kurbelwelle betrieben wird, und bei geringen Drehzahlen der Wärmekraftmaschine, bei welchen nur ein geringer Öldruck erzeugt wird.

Verschleiß führt zu einer wesentlichen Verringerung der Lebensdauer von Maschinen. In Kraftfahrzeugen z.B. kann Verschleiß zu einer Verringerung der Lebensdauer auf 10000 Betriebsstunden und in Dieselmotoren von Baumaschinen kann Verschleiß zu einer Verringerung der Lebensdauer auf bis zu 15000 Betriebsstunden führen.

Der Einsatz von Schmiermitteln führt ebenfalls zu Problemen. In Verbrennungskraftmaschinen wird immer ein Teil des Schmieröls mit verbrannt und führt so unter anderem zu einer erhöhten Umweltbelastung. Schmieröle werden durch Verunreinigungen und durch die auf sie ausgeübten Kräfte zerstört, weshalb bei geschmierten Maschinen ein hoher Wartungsaufwand durch regelmäßig notwendige Wechsel der Schmierstoffe anfällt.

Aufgabe der erfindungsgemäßen Kolbenmaschine ist eine verschleißarme Funktion ohne den Einsatz von Schmierstoffen. Weitere Aufgabe der erfindungsgemäßen Kolbenmaschine ist ein einfacher Aufbau bei einer Verringerung von beweglichen, verschleißintensiven Teilen gegenüber üblichen Kolbenmaschinen. Eine Erhöhung der Lebensdauer der Maschine bei geringeren Herstellungskosten über eine Verringerung der Teilezahl ist eine weitere Aufgabe der erfindungsgemäßen Kolbenmaschine.

Die angegebene Aufgabe wird bezüglich der Verbrennungsmaschine oder Sterlingmaschine mit den Merkmalen des Anspruchs 1 und bezüglich eines Verfahrens unter Verwendung der Verbrennungsmaschine oder Sterlingmaschine mit den Merkmalen des Anspruchs 15 gelöst.

Vorteilhafte Ausgestaltungen der erfindungsgemäßen Verbrennungsmaschine oder Sterlingmaschine und des Verfahrens unter Verwendung der Verbrennungsmaschine oder Sterlingmaschine gehen aus den jeweils zugeordneten abhängigen Unteransprüchen hervor. Dabei können die Merkmale von Ansprüchen mit Merkmalen zugeordneter Unteransprüche kombiniert werden.

Die erfindungsgemäße Verbrennungsmaschine oder Sterlingmaschine weist wenigstens einen ersten Kolben und wenigstens ein erstes Gehäuse auf, wobei das wenigstens eine erste Gehäuse den wenigstens einen ersten Kolben vollständig oder zumindest teilweise umschließt. Der wenigstens eine erste Kolben ist beweglich in dem wenigstens einen ersten Gehäuse magnetisch gelagert, mit Hilfe von wenigstens einer Einrichtung zur magnetischen Lagerung des wenigstens einen ersten Kolbens. Eine entsprechende Vorbrennungsmaschine ist aus WO 02/40843 A sowie aus US 4 889 039 A bekannt. Die wenigstens eine Einrichtungen zur magnetischen Lagerung des wenigstens einen ersten Kolbens ist relativ zu dem wenigstens einen ersten Gehäuse ortsfest angeordnet. Eine Größe eines Spaltes, welcher zwischen dem wenigstens einen ersten Kolben und dem wenigstens einem ersten Gehäuse besteht, ist durch eine Deformation des wenigstens einen ersten Kolben (3) und/oder durch Deformation des wenigstens einen ersten Gehäuses (2) einstellbar. Dabei sind insbesondere die Deformation oder die Deformationen durch die Wirkung eines Magnetfeldes hervorrufbar.

Durch die magnetische Lagerung des wenigstens einen ersten Kolbens in dem wenigstens einen ersten Gehäuse wird Reibung zwischen Kolben und Gehäuse verhindert und auf eine Verwendung von Schmiermitteln kann verzichtet werden. Eine ortsfeste Anordnung der wenigstens einen Einrichtung zur magnetischen Lagerung führt zu einem einfachen Aufbau mit einer minimalen Zahl an beweglichen Teilen. Eine solche Verbrennungsmaschine oder Sterlingmaschine ist einfach und kostengünstig herzustellen.

Die wenigstens eine Einrichtungen zur magnetischen Lagerung des wenigstens einen ersten Kolbens kann wenigstens eine, relativ zu dem wenigstens einen ersten Gehäuse ortsfest angeordnete, elektromagnetische Spule aufweisen. Eine elektromagnetische Spule lässt sich einfach durch einen Strom steuern und das für die magnetische Lagerung des Kolbens notwendige Magnetfeld lässt sich einfach in seiner Größe einstellen. Alternativ kann eine magnetische Lagerung auch über Permanentmagnete erfolgen.

Die wenigstens eine Einrichtung zur magnetischen Lagerung des wenigstens einen ersten Kolbens kann zwei Stellen zur Lagerung aufweisen mit jeweils drei Lagerpunkten. Durch diesen Aufbau können 4 Freiheitsgrade des Kolbens ausgeregelt werden und eine besonders stabile Lagerung erreicht werden. Die 4 Freiheitsgrade sind durch die Verschiebung des Kolbens in den zwei Achsen, welche senkrecht auf der Bewegungsachse des Kolbens liegen, und die Verkippung um diese zwei Achsen gegeben.

Alternativ oder zusätzlich kann der wenigstens eine erste Kolben wenigstens eine magnetische Spule aufweisen. Dies ermöglicht über die Spule oder die Spulen des Kolbens eine Erzeugung und Steuerung des Magnetfeldes, welches der Lagerung des Kolbens dient.

Der wenigstens eine erste Kolben kann wenigstens ein magnetisches Joch aufweisen, insbesondere ein geblechtes Joch und/oder ein Joch aus weichmagnetischen Kompositwerkstoffen. In dem Joch wird durch das Magnetfeld bei Bewegung des Kolbens ein Strom induziert, welcher ebenfalls ein Magnetfeld erzeugt. In Wechselwirkung mit dem Magnetfeld der wenigstens einen Einrichtung zur Lagerung des wenigstens einen ersten Kolbens wird der Kolben schwebend in dem wenigstens einen ersten Gehäuse gelagert. Auf eine Spule an oder in dem wenigstens einen ersten Kolben kann verzichtet werden, oder diese kann zusätzlich zur Feinsteuerung der Lagerung verwendet werden.

Der wenigstens eine erste Kolben kann mit wenigstens einer Feder, insbesondere mit einem Federsystem mechanisch verbunden sein. Die Feder oder das Federsystem können die magnetische, reibungsfreie Lagerung des wenigstens einen ersten Kolbens unterstützen. Die Feder oder das Federsystem können auch zur Kraftübertragung vom Kolben auf andere Teile verwendet werden.

Der wenigstens eine erste Kolben kann ein zylinderförmiger Rundkolben mit kreisrunder oder elyptischer Grundfläche sein und das wenigstens eine erste Gehäuse kann ein zylinderförmiges Gehäuse mit kreisrunder oder elyptischer Grundfläche sein. Dies führt zu einem besonders einfachen Aufbau. Eine elyptische Ausformung des Kolbens und des Gehäuses können eine stabile Lagerung auch über zwei Lagerstellen mit jeweils nur zwei Lagerpunkten ermöglichen oder bei drei Lagerpunkten zu einer Erhöhung der Lagerstabilität führen.

Der wenigstens eine erste Kolben kann wenigstens eine Verlängerung aufweisen, welche die Form eines Hohlzylinders hat. Das wenigstens eine erste Gehäuse kann für die wenigstens eine Verlängerung eine Ausnehmung aufweisen. Über die Verlängerung und die entsprechende Ausnehmung im Gehäuse kann eine weitere Stabilisierung des Kolbens erreicht werden und ein Verkanten des Kolbens im Betrieb der Maschine verhindert werden.

Die Verbrennungsmaschine oder Sterlingmaschine kann eine elektromagnetische Linearmaschine aufweisen. Durch die Kombination von magnetischer Lagerung des Kolbens und der elektromagnetischen Linearmaschine kann eine Energiewandlung direkt in der Linearmaschine erfolgen. Aufwendige mechanische Konstruktionen, welche unter Umständen geschmiert werden müssten, können so eingespart werden. Die elektromagnetische Linearmaschine und die wenigstens eine Einrichtungen zur magnetischen Lagerung des wenigstens einen ersten Kolbens können zwei voneinander getrennte Einrichtungen sein. Sie können aber auch gemeinsame Teile aufweisen. Im zweiten Fall können Teile, welche der magnetischen Lagerung dienen, bei der Energiewandlung durch die Linearmaschine verwendet werden. Dies führt zu einer Verringerung der Teilezahl gegenüber einem Aufbau mit getrennt voneinander aufgebauter Lagerung und Linearmaschine.

Die elektromagnetische Linearmaschine kann Ringspulen aufweisen, welche entlang einer Bewegungsrichtung des wenigstens einen ersten Kolbens angeordnet sind. Dies führt zu einem besonders einfachen Aufbau und zu einer Energiewandlung durch die Linearmaschine mit einem hohen Wirkungsgrad.

Die elektromagnetische Linearmaschine kann als Reluktanzmaschine, als PM-Synchronmaschine oder als Asynchronmaschine ausgeführt sein.

Weiterhin kann die elektromagnetische Linearmaschine n-phasig, mit einer positiven, ganzen Zahl n, aufgebaut sein und/oder die Urwicklung der elektromagnetische Linearmaschine kann entlang einer Geraden m-fach, mit einer positiven, ganzen Zahl m, hintereinander wiederholt angeordnet sein.

Zwischen dem wenigstens einen ersten Kolben und dem wenigstens einen ersten Gehäuse kann wenigstens eine erste Kammer gebildet sein, welche wenigstens einen Einström- und wenigstens einen Abströmkanal aufweist und/oder wenigstens ein Ventil aufweist. Dadurch wird durch die Verbrennungsmaschine oder Sterlingmaschine ein Kompressor oder eine Verbrennungsmaschine ausgebildet.

Bei einem Verfahren unter Verwendung der zuvor beschriebenen Verbrennungsmaschine oder Sterlingmaschine erfolgt die Einstellung der Größe eines Spaltes, welcher zwischen dem wenigstens einen ersten Kolben und dem wenigstens einem ersten Gehäuse besteht, durch eine Deformation des wenigstens einen ersten Kolbens und/oder durch Deformation des wenigstens einen ersten Gehäuses. Insbesondere kann die Deformation oder die Deformationen durch die Wirkung eines Magnetfeldes hervorgerufen werden. Das Magnetfeld wiederum kann durch Einrichtungen erzeugt werden, welche gleichzeitig zur Lagerung und/oder für die Linearmaschine genutzt werden.

Bei dem Verfahren kann eine Schlitzung des wenigstens einen ersten Gehäuses eine Verringerung der Kraft bewirken, welche zur Einstellung der Größe des Spaltes aufgewendet wird.

Eine Dichtung kann in den Spalt eingebracht werden und die magnetische Lagerung des wenigstens einen ersten Kolbens kann eine genau definierte Druckkraft auf die Dichtung bewirken. Die Dichtung kann aus PCTFE oder Teflon bestehen.

Das wenigstens eine erste Gehäuse kann auch gekühlt und/oder beheizt werden. Eine Kühlung und Beheizung kann gerade bei einer Ausführung der Verbrennungsmaschine oder Sterlingmaschine als Sterlingmotor vorteilhaft sein.

Bevorzugte Ausführungsformen der Erfindung mit vorteilhaften Weiterbildungen gemäß den Merkmalen der abhängigen Ansprüche werden nachfolgend anhand der folgenden Figuren näher erläutert, ohne jedoch darauf beschränkt zu sein.

Es zeigen:
- Fig. 1.: einen Längsschnitt einer Kolbenmaschine mit magnetischer Lagerung sowie mit einer elektromagnetischen Linearmaschine, und
- Fig. 2: einen Querschnitt senkrecht zu der Längsachse der in Fig. 1 gezeigten Kolbenmaschine, und
- Fig. 3: einen Längsschnitt der Kolbenmaschine aus Fig. 1 mit einer hohlzylinderförmigen Verlängerung des Kolbens und mit einer entsprechenden Ausnehmung im Gehäuse.

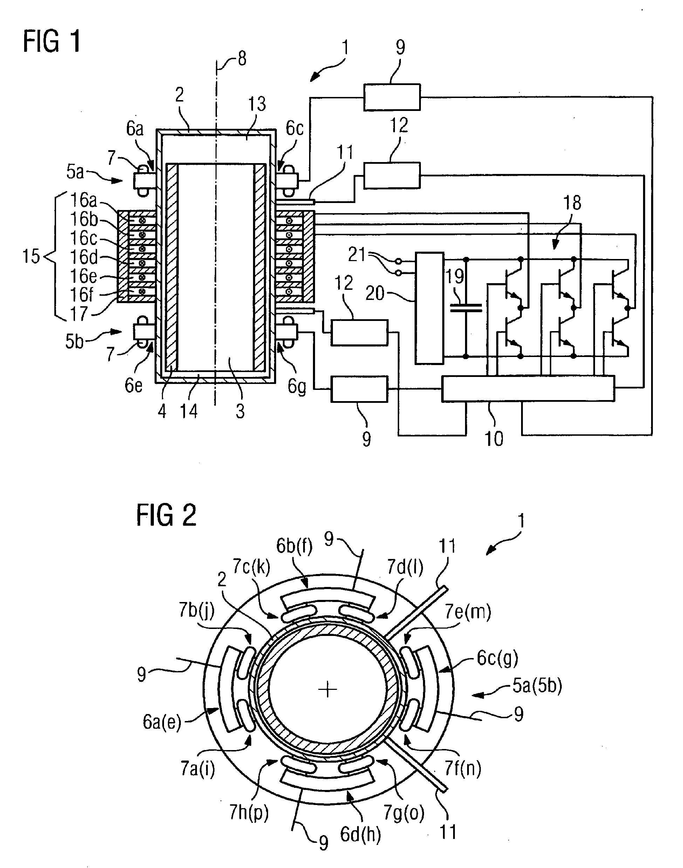

Fig. 1 zeigt einen Schnitt durch eine erfindungsgemäße Kolbenmaschine 1. Die Kolbenmaschine 1 weist ein zylinderförmiges Gehäuse 2 auf, in welchem ein zylinderförmiger Kolben 3 beweglich angeordnet ist. Auf der äußeren Umfangsfläche des zylinderförmigen Kolbens 3 ist ein magnetisches Joch 4 angeordnet. Außerhalb des Gehäuses 2, an seinem zylinderförmigen Außenumfang, sind an zwei Stellen 5a und 5b entlang des Außenumfangs jeweils an vier Lagerpunkten 6a bis 6d oder 6e bis 6g jeweils zwei Magnetkreise 7a bis 7p für eine magnetische Lagerung des Kolbens 3 angeordnet. Eine nicht in den Figuren dargestellte alternative Ausführungsform weist drei Lagerpunkte 6a bis 6c mit jeweils einem Magnetkreis 7a bis 7f auf, was für eine stabile Lagerung des Kolbens ausreichend sein kann. Kombinationen der zuvor genannten Anzahl oder je nach Anwendung und Kraftwirkungen Änderungen in der Anzahl an Magnetkreisen, Lagerpunkten und Stellen sind entsprechend der gewünschten Anwendung möglich. In der Schnittdarstellung in Figur 1 sind der Einfachheit halber nur zwei Lagerpunkte 6a und 6c bzw. 6e und 6g je Stelle 5a und 5b dargestellt. Die Stellen der Magnetlagerung 5a und 5b sind entlang einer Mittelachse 8 des Gehäuses 2 jeweils in gleichem Abstand von einer Grund- und Deckfläche des zylinderförmigen Gehäuses 2 angeordnet. Entlang einer kreisrunden Schnittfläche durch das Gehäuse 2, senkrecht zur Mittelachse 8, jeweils an einer Stelle 5a oder 5b der Magnetlagerung, sind entlang des Außenumfangs der kreisrunden Schnittfläche, in gleichen Abständen voneinander, die Lagerpunkte 6a bis 6c bzw. 6e bis 6g angeordnet.

Die Magnetkreise 7a bis 7p an den Lagerpunkten 6a bis 6g können aus Permanentmagneten oder aus elektromagnetischen Spulen aufgebaut sein. Im Falle von elektromagnetischen Spulen können diese jeweils ein Joch aufweisen. Die Magnetkreise 7a bis 7p erzeugen Magnetfelder, welche mit senkrecht zur Mittelachse 8 ausgerichteten Magnetfeldlinien in das Gehäuse 2 hineinragen. Die Wechselwirkung zwischen diesen Magnetfeldern und dem Magnetfeld, welches durch das magnetische Joch 4 des Kolbens 3 erzeugt wird, führt zu einer berührungsfreien, magnetischen Lagerung des Kolbens 3 im Gehäuse 2. Dabei ist der Kolben 3 innerhalb des Gehäuses 2 entlang der Mittelachse 8 frei beweglich. Die Wechselwirkung der Magnetfelder des Jochs 4 und der Magnetkreise 7a bis 7p halten den Kolben 3 in einem Schwebezustand im Gehäuse 2, ohne dass der Kolben 3 das Gehäuse 2 berührt.

wie in Fig. 1 dargestellt, wird die Größe des Magnetfeldes der Magnetkreise 7a bis 7p aus Spulen jeweils elektrisch über einen Stromfluss innerhalb der Spulen bestimmt. Eine Steuerelektronik der Magnetkreise 9 steuert bzw. regelt die Größe der Ströme in den Spulen und damit die Größe der Magnetfelder der Magnetkreise 7a bis 7p. Bei einer Regelung können Abstandssensoren 11, welche am Gehäuse 2 angeordnet sind, Informationen über die Lage des Kolbens 3 im Gehäuse 2 liefern und über eine Elektronik der Abstandssensoren 12 und einem Zentralregler der Steuerelektronik 10 Signale an die Steuerelektronik der Magnetkreise 7a bis 7p geben. Über die Signale werden die Magnetfelder geregelt und bei Abweichung der Mittelachse des Kolbens von der Mittelachse des Gehäuses 8 kann ein Abstandssensor 11 ein Signal an die Elektronik 12, 10, 9 geben, was zu einer Anpassung des Stromes in den Magnetkreisen 7a bis 7p führt, wodurch das Magnetfeld sich ändert und in Wechselwirkung mit dem Magnetfeld des Jochs 4 des Kolbens 3 eine zusätzliche Kraft auf den Kolben ausgeübt wird, welche dessen Lage ändert. Die Lage wird so geändert, dass seine Mittelachse mit der Mittelachse des Gehäuses 8 übereinstimmt.

Wie in Fig. 1 weiterhin dargestellt, sind auf dem Außenumfang des Gehäuses 2 Spulen 16a bis 16e sowie ein Joch 17 angeordnet, welches die Spulen 16a bis 16e umschließt. Die Spulen 16a bis 16e in Verbindung mit dem Joch 17 sowie in Verbindung mit dem Joch 4 des Kolbens 3 bilden eine Linearmaschine 15. Somit dient das Joch 4 des Kolbens 3 sowohl der magnetischen Lagerung des Kolbens 4, als auch als Teil der Linearmaschine 15. Mit Hilfe der Linearmaschine 15 kann mechanische Energie des Kolbens 4 direkt in elektrische Energie und/oder umgekehrt umgewandelt werden. Aufwendige Mechanik, welche dem Verschleiß unterliegt und geschmiert werden müsste, wird eingespart. Die Linearmaschine 15 ist über eine Elektronik 18 und einem Zwischenstromkreis 19 sowie einer Elektronik zur Netzanbindung 20 an ein Stromnetz über Anschlüsse 21 anschließbar. Somit ist ein Strom, welcher von der Linearmaschine 15 erzeugt wird einem äußeren Stromnetz zuführbar.

Fig. 2 zeigt einen Querschnitt senkrecht zu der Längsachse der Kolbenmaschine 1 an einer Stelle 5a oder 5b. Zwei Abstandssensoren 11 sind in der Schnittdarstellung zu sehen, welche am Gehäuse 2 angebracht sind bzw. im Gehäuse 2 integriert sind, und räumlich leicht versetzt von der Stelle 5a oder 5b angeordnet sind. Wie in Fig. 1 dargestellt, sind an der zweiten Stelle 5b oder 5a weitere zwei Abstandssensoren 11 leicht räumlich versetzt angeordnet. Über die vier Abstandssensoren 11 ist die Lage des Kolbens 3 relativ zum Gehäuse 2 eindeutig bestimmbar.

Zwischen Kolben 3 und Gehäuse 2 sind jeweils entlang der Längsachse 8 am Anfang und Ende des Gehäuses 2 und Kolbens 3 eine erste und eine zweite Kammer 13 und 14 ausgebildet. Bei der Bewegung des Kolbens 3 entlang der Längsachse 8 ändert sich das Volumen der Kammern 13 und 14. Nimmt das Volumen der Kammer 13 ab, so nimmt das Volumen der Kammer 14 zu und umgekehrt. Die Kammern 13 und 14 können als Verbrennungskammern in einer Verbrennungsmaschine dienen, oder in einer Sterlingmaschine kann abwechselnd eine Kammer erwärmt und eine Kammer abgekühlt werden sowie umgekehrt. Dadurch wird auf den Kolben 3 eine Kraft ausgeübt, welche die Bewegung längs der Achse 8 erzeugt. Die Bewegungsenergie der Bewegung des Kolbens 3 kann durch die Linearmaschine 15 direkt in elektrische Energie umgewandelt werden.

Am bzw. integriert im Gehäuse 2 sind in Fig. 2 an der Stelle 5a bzw. 5b jeweils vier Lagerpunkte 6a bis 6d bzw. 6e bis 6h gezeigt. An jedem Lagerpunkt 6a bis 6h sind jeweils zwei Magnetkreise 7 angeordnet, welche jeweils ein Joch oder ein gemeinsames Joch aufweisen, wobei der Einfachheit halber nur letzteres in Fig. 2 dargestellt ist.

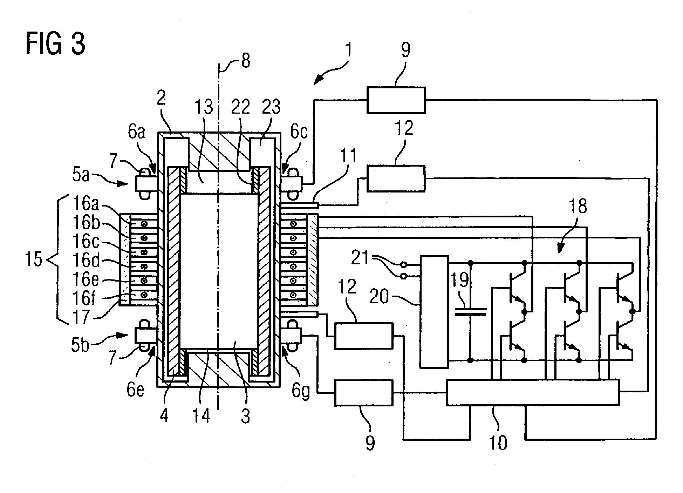

In Fig. 3 ist eine alternative Ausführungsform der erfindungsgemäßen Kolbenmaschine 1 dargestellt. Diese Ausführungsform führt im Vergleich zu der Ausführungsform in den Fig. 1 und 2 zu einer höheren Lagestabilität des Kolbens 3 relativ zum Gehäuse 2 bzw. verhindert ein Verkanten des Kolbens 3 im Gehäuse 2. Im Gehäuse 2 ist, wie in Fig. 3 dargestellt, am Kolbenanfang und Kolbenende jeweils ein Hohlzylinder angeordnet. Der Kolben 3 ist also jeweils an seinen Enden mit Hilfe einer hohlzylinderförmigen Verlängerung 22 verlängert. Entsprechende Ausnehmungen 23 mit einer den hohlzylinderförmigen Verlängerungen 22 inversen Form sind jeweils am Gehäuseanfang und Gehäuseende ausgebildet.

## Patentansprüche

1. Verbrennungsmaschine oder Sterlingmaschine (1) mit wenigstens einem ersten Kolben (3) und wenigstens einem ersten Gehäuse (2), wobei das wenigstens eine erste Gehäuse (2) den wenigstens einen ersten Kolben (3) vollständig oder zumindest teilweise umschließt, und der wenigstens eine erste Kolben (3) beweglich in dem wenigstens einen ersten Gehäuse (2) magnetisch gelagert ist, mit Hilfe von wenigstens einer Einrichtung (7) zur magnetischen Lagerung des wenigstens einen ersten Kolbens (3), **dadurch gekennzeichnet, dass** die wenigstens eine Einrichtungen (7) zur magnetischen Lagerung des wenigstens einen ersten Kolbens (3) relativ zu dem wenigstens einen ersten Gehäuse (2) ortsfest angeordnet ist und eine Größe eines Spaltes, welcher zwischen dem wenigstens einen ersten Kolben (3) und dem wenigstens einem ersten Gehäuse (2) besteht durch eine Deformation des wenigstens einen ersten Kolben (3) und/oder durch Deformation des wenigstens einen ersten Gehäuses (2) einstellbar ist, wobei insbesondere die Deformation oder die Deformationen durch die Wirkung eines Magnetfeldes hervorrufbar sind.

2. Verbrennungsmaschine oder Sterlingmaschine (1) nach Anspruch 1, **dadurch gekennzeichnet, dass** die wenigstens eine Einrichtungen (7) zur magnetischen Lagerung des wenigstens einen ersten Kolbens wenigstens eine, relativ zu dem wenigstens einen ersten Gehäuse (2) ortsfest angeordnete, elektromagnetische Spule aufweist.

3. Verbrennungsmaschine oder Sterlingmaschine (1) nach Anspruch 1 oder 2, **dadurch gekennzeichnet, dass** die wenigstens eine Einrichtung (7) zur magnetischen Lagerung des wenigstens einen ersten Kolbens (3) zwei Stellen (5a, 5b) zur Lagerung mit jeweils drei Lagerpunkten (6a bis 6f) aufweist.

4. Verbrennungsmaschine oder Sterlingmaschine (1) nach einem der vorhergehenden Ansprüche, **dadurch gekennzeichnet, dass** der wenigstens eine erste Kolben (3) wenigstens eine magnetische Spule aufweist.

5. Verbrennungsmaschine oder Sterlingmaschine (1) nach einem der vorhergehenden Ansprüche, **dadurch gekennzeichnet, dass** der wenigstens eine erste Kolben (3) wenigstens ein magnetisches Joch (4) aufweist, insbesondere ein geblechtes Joch (4) und/oder ein Joch (4) aus weichmagnetischen Kompositwerkstoffen.

6. Verbrennungsmaschine oder Sterlingmaschine (1) nach einem der vorhergehenden Ansprüche, **dadurch gekennzeichnet, dass** der wenigstens eine erste Kolben (3) mit wenigstens einer Feder, insbesondere einem Federsystem mechanisch verbunden ist.

7. Verbrennungsmaschine oder Sterlingmaschine (1) nach einem der vorhergehenden Ansprüche, **dadurch gekennzeichnet, dass** der wenigstens eine erste Kolben (3) ein zylinderförmiger Rundkolben mit kreisrunder oder elyptischer Grundfläche ist und das wenigstens eine erste Gehäuse (2) ein zylinderförmiges Gehäuse mit kreisrunder oder elyptischer Grundfläche ist.

8. Verbrennungsmaschine oder Sterlingmaschine (1) nach einem der vorhergehenden Ansprüche, **dadurch gekennzeichnet, dass** der wenigstens eine erste Kolben (3) wenigstens eine Verlängerung (22) aufweist, welche die Form eines Hohlzylinders aufweist und dass das wenigstens eine erste Gehäuse (2) für die wenigstens eine Verlängerung (22) eine Ausnehmung (23) aufweist.

9. Verbrennungsmaschine oder Sterlingmaschine (1) nach einem der vorhergehenden Ansprüche, **dadurch gekennzeichnet, dass** die Kolbenmaschine (1) eine elektromagnetische Linearmaschine (15) aufweist.

10. Verbrennungsmaschine oder Sterlingmaschine (1) nach Anspruch 9, **dadurch gekennzeichnet, dass** die elektromagnetische Linearmaschine (15) Ringspulen (16a bis 16e) aufweist, welche entlang einer Bewegungsrichtung des wenigstens einen ersten Kolbens (3) angeordnet sind.

11. Verbrennungsmaschine oder Sterlingmaschine (1) nach Anspruch 9 oder 10, **dadurch gekennzeichnet, dass** die elektromagnetische Linearmaschine (15) als Reluktanzmaschine oder als PM-Synchronmaschine oder als Asynchronmaschine ausgeführt ist.

12. Verbrennungsmaschine oder Sterlingmaschine (1) nach einem der Ansprüche 9 bis 11, **dadurch gekennzeichnet, dass** die elektromagnetische Linearmaschine (15) n-phasig, mit einer positiven, ganzen Zahl n, aufgebaut ist und/oder die Urwicklung der elektromagnetische Linearmaschine entlang einer Geraden m-fach, mit einer positiven, ganzen Zahl m, hintereinander wiederholt angeordnet ist.

13. Verbrennungsmaschine oder Sterlingmaschine (1) nach einem der Ansprüche 9 bis 12, **dadurch gekennzeichnet, dass** die elektromagnetische Linearmaschine (15) und die wenigstens eine Einrichtungen (7) zur magnetischen Lagerung des wenigstens einen ersten Kolbens (3) zwei voneinander getrennte Einrichtungen sind.

14. Verbrennungsmaschine oder Sterlingmaschine (1) nach einem der vorhergehenden Ansprüche, **dadurch gekennzeichnet, dass** zwischen dem wenigstens
einen ersten Kolben (3) und dem wenigstens einen ersten Gehäuse (2) wenigstens eine erste Kammer (13) gebildet ist, welche wenigstens einen Einström- und wenigstens einen Abströmkanal aufweist und/oder wenigstens ein Ventil aufweist.

15. Verfahren unter Verwendung einer Verbrennungsmaschine oder Sterlingmaschine (1) nach einem der vorhergehenden Ansprüche, **dadurch gekennzeichnet, dass** die Einstellung der Größe eines Spaltes, welcher zwischen dem wenigstens einen ersten Kolben (3) und dem wenigstens einem ersten Gehäuse (2) besteht, durch eine Deformation des wenigstens einen ersten Kolben (3) und/oder durch Deformation des wenigstens einen ersten Gehäuses (2) erfolgt, wobei insbesondere die Deformation oder die Deformationen durch die Wirkung eines Magnetfeldes hervorgerufen werden.

16. Verfahren nach Anspruch 15, **dadurch gekennzeichnet, dass** eine Schlitzung des wenigstens einen ersten Gehäuses (2) eine Verringerung der Kraft bewirkt, welche zur Einstellung der Größe des Spaltes aufgewendet wird.

17. Verfahren nach Anspruch 15 oder 16, **dadurch gekennzeichnet, dass** eine Dichtung, insbesondere eine Dichtung bestehend aus PCTFE oder Teflon, in den Spalt eingebracht wird und dass die magnetische Lagerung des wenigstens einen ersten Kolbens (3) eine genau definierte Druckkraft auf die Dichtung bewirkt.

18. Verfahren nach einem der Ansprüche 15 bis 17, **dadurch gekennzeichnet, dass** das wenigstens eine erste Gehäuse (2) gekühlt und/oder beheizt wird.

## Claims

1. Internal combustion engine or Sterling engine (1) having at least one first piston (3) and at least one first housing (2), wherein the at least one first housing (2) completely, or at least partially, encloses the at least one first piston (3), and the at least one first piston (3) is magnetically supported in a movable manner in the at least one first housing (2) by means of at least one device (7) for the magnetic supporting of the at least one first piston (3), **characterized in that** the at least one device (7) for the magnetic supporting of the at least one first piston (3) is arranged in a stationary manner relative to the at least one first housing (2) and a size of a gap which exists between the at least one first piston (3) and the at least one first housing (2) can be set by means of deformation of the at least one first piston (3) and/or by means of deformation of the at least one first housing (2), wherein in particular the deformation, or the deformations, can be brought about as a result of the effect of a magnetic field.

2. Internal combustion engine or Sterling engine (1) according to Claim 1, **characterized in that** the at least one device (7) for the magnetic supporting of the at least one first piston has at least one electromagnetic coil which is arranged in a stationary manner relative to the at least one first housing (2).

3. Internal combustion engine or Sterling engine (1) according to Claim 1 or 2, **characterized in that** the at least one device (7) for the magnetic supporting of the at least one first piston (3) has two positions (5a, 5b) for supporting with three support points (6a to 6f) in each case.

4. Internal combustion engine or Sterling engine (1) according to one of the preceding claims, **characterized in that** the at least one first piston (3) has at least one magnetic coil.

5. Internal combustion engine or Sterling engine (1) according to one of the preceding claims, **characterized in that** the at least one first piston (3) has at least one magnetic yoke (4), especially a laminated yoke (4), and/or a yoke (4) consisting of soft magnetic composite materials.

6. Internal combustion engine or Sterling engine (1) according to one of the preceding claims, **characterized in that** the at least one first piston (3) is mechanically connected to at least one spring, especially to a spring system.

7. Internal combustion engine or Sterling engine (1) according to one of the preceding claims, **characterized in that** the at least one first piston (3) is a cylindrical circular piston with a circular or elliptical base surface and the at least one first housing (2) is a cylindrical housing with a circular or elliptical base surface.

8. Internal combustion engine or Sterling engine (1) according to one of the preceding claims, **characterized in that** the at least one first piston (3) has at least one extension (22) which has the form of a hollow cylinder, and **in that** the at least one first housing (2) has a recess (23) for the at least one extension (22).

9. Internal combustion engine or Sterling engine (1) according to one of the preceding claims, **characterized in that** the piston engine (1) has an electromagnetic linear machine (15).

10. Internal combustion engine or Sterling engine (1) according to Claim 9, **characterized in that** the electromagnetic linear machine (15) has ring coils (16a to 16e) which are arranged along a movement direction of the at least one first piston (3).

11. Internal combustion engine or Sterling engine (1) according to Claim 9 or 10, **characterized in that** the electromagnetic linear machine (15) is constructed as a reluctance machine or as a PM synchronous machine or as an asynchronous machine.

12. Internal combustion engine or Sterling engine (1) according to one of Claims 9 to 11, **characterized in that** the electromagnetic linear machine (15) is of an n-phase construction with a positive integer n, and/or the winding of the electromagnetic linear machine is arranged along a straight line, consecutively repeated m-times with a positive integer m.

13. Internal combustion engine or Sterling engine (1) according to one of Claims 9 to 12, **characterized in that** the electromagnetic linear machine (15) and the at least one device (7) for the magnetic supporting of the at least one first piston (3) are two devices which are separated from each other.

14. Internal combustion engine or Sterling engine (1) according to one of the preceding claims, **characterized in that** at least one first chamber (13) is formed between the at least one first piston (3) and the at least one first housing (2) and has at least one inflow passage and at least one outflow passage and/or has at least one valve.

15. Method when using an internal combustion engine or Sterling engine (1) according to one of the preceding claims, **characterized in that** the adjustment of the size of a gap which exists between the at least one first piston (3) and the at least one first housing (2) is carried out by means of deformation of the at least one first piston (3) and/or by means of deformation of the at least one first housing (2), wherein in particular the deformation, or the deformations, are brought about as a result of the effect of a magnetic field.

16. Method according to Claim 15, **characterized in that** a slotting of the at least one first housing (2) brings about a reduction of the effort which is expended for the adjustment of the size of the gap.

17. Method according to Claim 15 or 16, **characterized in that** a seal, especially a seal consisting of PCTFE or Teflon, is introduced into the gap, and **in that** the magnetic supporting of the at least one first piston (3) brings about an accurately defined pressure force upon the seal.

18. Method according to one of Claims 15 to 17, **characterized in that** the at least one first housing (2) is cooled and/or heated.

## Revendications

1. Machine à combustion interne ou machine ( 1 ) Sterling, ayant au moins un premier piston ( 3 ) et au moins une première enveloppe ( 2 ) la au moins première enveloppe ( 2 ) entourant complètement ou au moins en partie le au moins un premier piston ( 3 ) et le au moins un premier piston ( 3 ) étant monté magnétiquement mobile dans la au moins une première enveloppe ( 2 ) à l'aide d'au moins un dispositif ( 7 ) de montage magnétique du au moins un premier piston ( 3 ), **caractérisée en ce que** le au moins un dispositif ( 7 ) de montage magnétique du au moins un premier piston ( 3 ) est disposé à poste fixe par rapport à la au moins une première enveloppe ( 2 ) et une dimension d'un intervalle entre le au moins un premier piston ( 3 ) et la au moins une première enveloppe ( 2 ) est réglable par une déformation du au moins un premier piston ( 3 ) et/ou par une déformation de la au moins une première enveloppe ( 2 ), la déformation ou les déformations pouvant être provoqué par l'effet d'un champ magnétique.

2. Machine à combustion interne ou machine ( 1 ) Sterling suivant la revendication 1, **caractérisée en ce que** le au moins un dispositif ( 7 ) de montage magnétique du au moins un premier piston a au moins une bobine électromagnétique disposée à poste fixe par rapport à la au moins une première enveloppe ( 2 ).

3. Machine à combustion interne ou machine ( 1 ) Sterling suivant la revendication 1 ou 2, **caractérisée en ce que** le au moins un dispositif ( 7 ) de montage magnétique du au moins un premier piston ( 3 ) a deux endroits ( 5a, 5b ) de montage par respectivement trois points ( 6a à 6f ) de palier.

4. Machine à combustion interne ou machine ( 1 ) Sterling suivant l'une des revendications précédentes, **caractérisée en ce que** le au moins un premier piston ( 3 ) a au moins une bobine magnétique.

5. Machine à combustion interne ou machine ( 1 ) Sterling suivant l'une des revendications précédentes, **caractérisée en ce que** le au moins un premier piston ( 3 ) a au moins une culasse ( 4 ) magnétique, notamment une culasse ( 4 ) feuilletée et/ou une culasse ( 4 ) en des matériaux composites à magnétisme doux.

6. Machine à combustion interne ou machine ( 1 ) Sterling suivant l'une des revendications précédentes, **caractérisée en ce que** le au moins un premier piston ( 3 ) est relié mécaniquement à au moins un ressort, notamment à un système de ressort.

7. Machine à combustion interne ou machine ( 1 ) Sterling suivant l'une des revendications précédentes, **caractérisée en ce que** le au moins un premier piston ( 3 ) est un piston en forme de cylindre à surface de base circulaire ou elliptique et la au moins la première enveloppe ( 2 ) est une enveloppe de forme cylindrique à surface de base circulaire ou elliptique.

8. Machine à combustion interne ou machine ( 1 ) Sterling suivant l'une des revendications précédentes, **caractérisée en ce que** le au moins un premier piston ( 3 ) a au moins un prolongement ( 22 ) qui a la forme d'un cylindre creux et **en ce que** la au moins une première enveloppe ( 2 ) a un évidemment ( 23 ) pour le au moins le prolongement ( 22 ).

9. Machine à combustion interne ou machine ( 1 ) Sterling suivant l'une des revendications précédentes, **caractérisée en ce que** la machine ( 1 ) a piston comporte une machine ( 15 ) linéaire électromagnétique.

10. Machine à combustion interne ou machine ( 1 ) Sterling suivant la revendication 9, **caractérisée en ce que** la machine ( 15 ) linéaire électromagnétique a des bobines ( 16a, 16e ) annulaires qui sont disposées suivant une direction de déplacement du au moins un premier piston ( 3 ).

11. Machine à combustion interne ou machine ( 1 ) Sterling suivant la revendication 9 ou 10, **caractérisée en ce que** la machine ( 15 ) linéaire électromagnétique est réalisée sous la forme d'une machine à réductance ou d'une machine synchrone ( PM )ou d'une machine asynchrone.

12. Machine à combustion interne ou machine ( 1 ) Sterling suivant la revendication 9 ou 11, **caractérisée en ce que** la machine ( 15 ) linéaire électromagnétique est à n-phase, n étant un nombre entier positif et/ou l'enroulement primaire de la machine linéaire électromagnétique est disposé le long d'une droite en se répétant m-fois, m étant un nombre entier positif.

13. Machine à combustion interne ou machine ( 1 ) Sterling suivant les revendications 9 à 12 , **caractérisée en ce que** la machine ( 15 ) linéaire électromagnétique et le au moins un dispositif ( 7 ) de montage magnétique du au moins un premier piston ( 3 ) sont deux dispositifs distincts l'un de l'autre.

14. Machine à combustion interne ou machine ( 1 ) Sterling suivant l'une des revendications précédentes, **caractérisée en ce que** entre le au moins un premier piston ( 3 ) et la au moins une première enveloppe est formée au moins une première chambre ( 13 ) qui a au moins un canal d'entrée et au moins un canal de sortie et/ou au moins une vanne.

15. Procédé en utilisant une machine de combustion ou une machine ( 1 ) Sterling suivant l'une des revendications précédentes, **caractérisé en ce que** le réglage de la dimension d'un intervalle entre le au moins un premier piston ( 3 ) et la au moins une première enveloppe ( 2 ) s'effectue par une déformation du au moins un premier piston ( 3 ) et/ou par une déformation de la au moins une première enveloppe ( 2 ), la déformation ou les déformations étant provoquée notamment par l'effet d'un champ magnétique.

16. Procédé suivant la revendication 15, **caractérisé en ce qu'**une fente de la au moins une première enveloppe ( 2 ) provoque une diminution de la force appliquée pour régler la dimension de l'intervalle.

17. Procédé suivant la revendication 15 ou 16, **caractérisé en ce qu'**une garniture d'étanchéité, notamment une garniture d'étanchéité en PCTFE ou en Téflon, est mise dans l'intervalle et **en ce que** le montage magnétique du au moins un premier piston ( 3 ) provoque une force de pression définie exactement sur la garniture d'étanchéité.

18. Procédé suivant l'une des revendications 15 à 17, **caractérisé en ce que** l'on refroidie et/ou réchauffe la au moins une première enveloppe ( 2 ).
